# EUROPEAN PATENT SPECIFICATION

(11) **EP 2 535 817 B1**
(45) Date of publication and mention of the grant of the patent: **02.04.2014**
(21) Application number: 12182536.8
(22) Date of filing: 13.12.2011
(51) Int. Cl.: G06F 11/20, G06F 11/14, G06F 11/07

(54) **Information processing system**
Informationsverarbeitungssystem
Système de traitement d informations

(30) Priority: 16.12.2010 JP 2010280003
(43) Date of publication of application: 19.12.2012
(62) Divisional of application: 11193336.2
(73) Proprietor: Hitachi Ltd., Tokyo (JP)
(72) Inventor: Nishijima, Motoi, Chiyoda-ku, Tokyo 100-8220 (JP); Nishiyama, Takashi, Chiyoda-ku, Tokyo 100-8220 (JP); Aoyagi, Takashi, Chiyoda-ku, Tokyo 100-8220 (JP)
(74) Representative: Moore, Graeme Patrick

(56) References cited:
- EP-A2- 1 672 507
- WO-A1-03/036484
- US-A1- 2005 120 259
- US-A1- 2009 276 616
- US-A1- 2010 293 256

## Description

### BACKGROUND OF THE INVENTION

The present invention relates to an information processing system, and more particularly to a degradation control technology for an information processing system having a plurality of microprocessors.

Conventionally, a multiprocessor-type information processing system having a plurality of processors may cause such a critical error on a particular processor that it is difficult for the system to work continuously. In such a case, there arises (1) a problem that the system cannot restart and continue operation; or (2) another problem that, even if the system can continue operation by restarting the system, the system goes down again due to the same phenomenon because the microprocessor which has caused an error may work continuously.

JP-A-2000-122986 discloses a "function of degrading processors" as a technology for enhancing availability of an information processing system having a plurality of processors. Further, JP-A-11-053329 discloses a technology for degrading processors in which a fault occurs, by stopping power supply to the processors, without affecting other normal processors.

EP1672507 discloses a fault tolerant (FT) computer system which includes a first system; and a second system configured to operate in synchronization with the first system. Each of the first and second systems includes a CPU; and a routing controller connected with the CPU. The first system includes a first I/O device as an activist I/O device, and the second system includes a second I/O device as a standby I/O device. The routing controller controls a routing between the CPU and the first I/O device and the second I/O device. When a fault has occurred in the first I/O device, the routing controller in said first system routes a request data a request data received from the CPU and destined to the first I/O device, to the second I/O device.

US2009/0276616 discloses a servo device and method of a shared basic input/output system (BIOS) which includes a plurality of mainboards, a circuit board, and a switching control unit. When a disk boot failure event of the mainboard occurs, a transmission path is conducted between the mainboard where the disk boot failure event occurs and a memory unit of another mainboard according to a control signal generated by the switching control unit in response to the disk boot failure event of the mainboard, such that the mainboard shares the BIOS.

### SUMMARY OF THE INVENTION

The conventional technology for degrading processors assumes that a plurality of processors are connected via a common processor bus and exchange signals via the bus. In the recent years' processors, a new attempt has been made in which the conventional 110 bridges are built in processors. For example, processors and chipsets such as Xeon 3400 by Intel Corporation are known.

In employing such processors and chipsets and supporting a function of degrading processors, various restrictions must be taken into consideration. For example, if a design is made so as to satisfy connection restrictions between processors and chipsets, there may arise cases where a processor cannot be degraded.

An example will be described with reference to a system block diagram showing a connection form of major components of a multiprocessor-type information processing system.

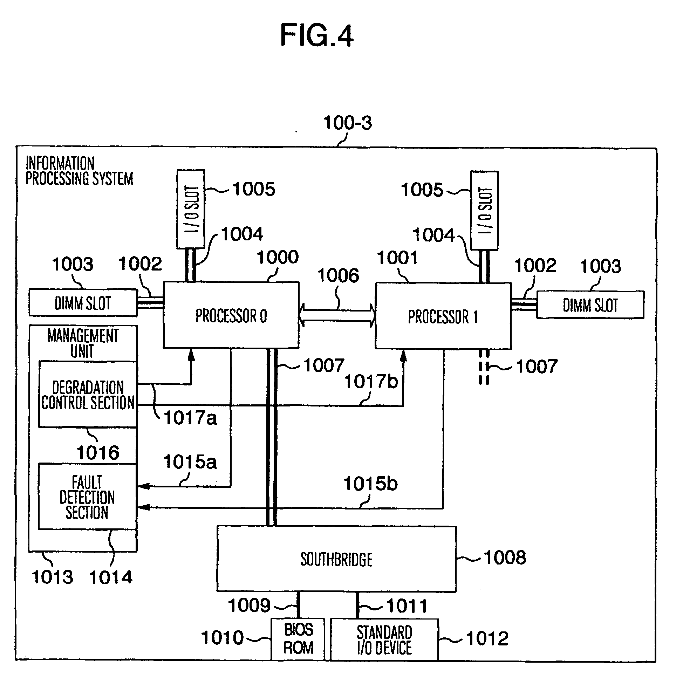

The information processing system 100-3 shown in Fig. 4 comprises processors 0 (1000) and 1 (1001). The processors 1000 and 1001 have memory control functions and are connected to DIMM slots 1003 via memory interfaces 1002. The respective processors 1000 30 and 1001 also have an I/O control function and are connected to an I/0 slot 1005 via PCI-Express 1004. Further, the respective processors 1000 and 1001 have an error detection function for providing an error detection signal when a fault such as a DIMM error, an I/O error and an internal operation error occurs.

The processors 1000 and 1001 are connected to each other via an inter-processor link 1006 so as to transmit/receive data to/from the processors. The processor 0 (1000) also connects to a southbridge 1008 via a southbridge interface (I/F) 1007. The southbridge 1008 is also connected via an I/O interface 1011 to an input/output device (not shown) such as a video device, a LAN device or a storage device, and a standard I/O device 1012 which is a legacy I/O device such as a serial port and normally required for a server system. The southbridge 1008 is further connected to a BIOS ROM 1010 via a ROM I/F 1009. The processor 0 (1000) reads out the BIOS ROM 1010 at the initialization of the server system, and executes the read instructions required for the initialization of the server system.

Meanwhile, it is not permitted to connect a plurality of southbridges 1008, a plurality of standard I/O devices 1012 and a plurality of BIOS ROMs 1010 in the information processing system 100-3 because of connection restrictions between processors and chipsets. For this reason, the southbridge I/F 1007 of the processor 1 (1001) is usually unconnected or connected to another different device.

A "processor" here designates a physical device as a processor chip. The number of the processor is assumed to be one even if it is a multi-core processor which is the mainstream in recent years. The numbers of processors, DIMM slots and I/O slots may not be limited to those in this example.

On the other hand, a management unit 1013 of the information processing system 100-3 is configured to include a fault detection section 1014 and a degradation control section 1016. The fault detection section 1014 is connected to the processors 0 (1000) and 1 (1001), and stores information on error detection signals 1015a and 1015b from the processors 0 and 1, respectively. The degradation control section 1016 is connected to the processors 0 (1000) and 1 (1001), outputs to the processors 0 and 1 processor degradation control signals 1017a and 1017b based on the information stored in the fault detection section 1014, respectively, and thereby performs degradation control of an arbitrary processor.

In the information processing system 100-3 configured in this way shown in Fig. 4, let us consider a case where a crucial fault occurs in the processor 0 (1000) but no fault occurs in the other processor. The management unit 1013 can degrade the processor 0 (1000) by outputting a processor degradation control signal 1017a from the degradation control section 1016 based on information from the fault detection section 1014. However, even when the processor 0 (1000) is degraded, access to the southbridge 1008 and the BIOS ROM 1010 needs to be performed via the processor 0 (1000), and thus the access to the southbridge 1008 and the BIOS ROM 1010 is impossible as long as the processor 0 (1 000) is degraded. As a result, there arises a problem that the information processing system 100-3 cannot be started until the processor 0 (1000) is replaced.

To solve the above problems, there is provided an information processing system according to claim 1, which provides a route switching function of controlling the connection between a processor unit and the first memory unit among a plurality of processor units and the first memory unit (for example, BIOS ROM). When a fault occurs in a particular processor unit, the route switching function switches routes so as to connect the first memory unit and another processor unit in which a fault does not occur.

The present invention enables the multiprocessor-type information processing system having a plurality of processors to access BIOS ROM via a route connected through another processor, even in a platform in which the access is performed via a route connected through a specified processor due to connection restrictions between processors and chipsets, and thus makes it possible to provide a function of degrading processors and enhance availability of the information processing system.

As seen from the above, for example, even in such a configuration that a processor which causes an error is connected to a southbridge, a function of degrading processors can be provided independently from connection restrictions between processors and chipsets, by degrading the processor which causes an error and then switching the connection destination of the southbridge into another normal processor.

These objects are solved in advantageous manner basically by applying the features laid down in claim 1. Further enhancements are provided by subclaims 2-4.

Other objects, features and advantages of the invention will become apparent from the following description of the embodiments of the invention taken in conjunction with the accompanying drawings.

### BRIEF DESCRIPTION OF THE DRAWINGS

Fig. 1 is a block diagram of an information processing system according to Embodiment 1 of the present invention.
Fig. 2 is a flow chart of degradation control according to Embodiment 1.
Fig. 3 is an information table for setting a connecting route of a southbridge in a route switching unit according to Embodiment 1.
Fig. 4 is a block diagram of a conventional information processing system.
Fig. 5 is a block diagram of an information processing system according to Embodiment 2 as claimed in patent application EP-A-2535817.
Fig. 6 is a flow chart of degradation control according to Embodiment 2.
Fig. 7 is an information table for setting degradation control according to Embodiment 2.
Fig. 8 is an information table for setting degraded processors and connection destination processors of southbridges according to Embodiment 2.
Fig. 9 is a detailed block diagram of a route control switch according to Embodiment 2.

### DETAILED DESCRIPTION OF THE EMBODIMENTS

An information processing system according to the present invention will be explained below with reference to the accompanying drawings.

### [EMBODIMENT 1]

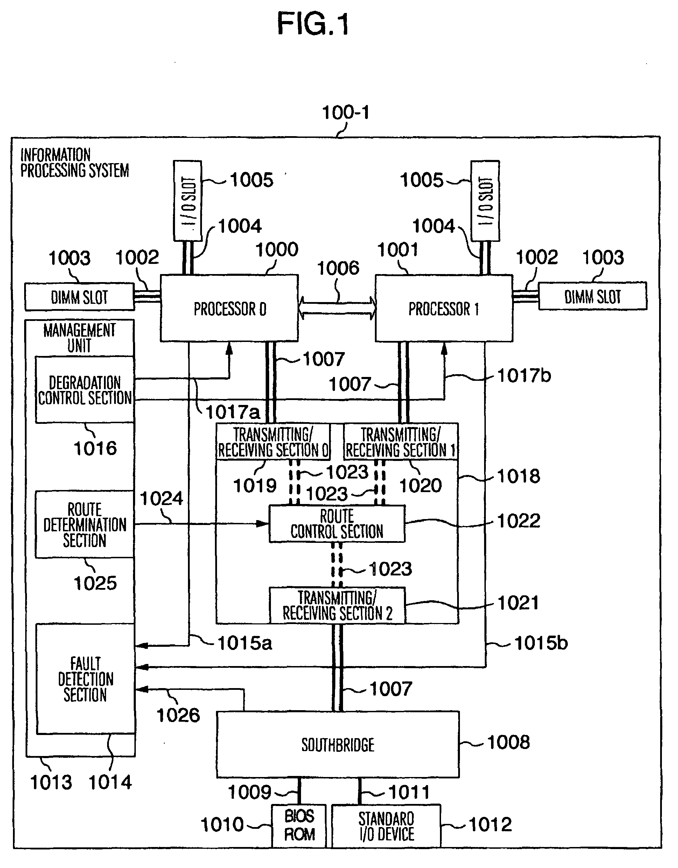

Fig. 1 is a block diagram of an information processing system 100-1 according to the present invention. Meanwhile, parts with the same reference characters as those in Fig. 4 designate the same components or the same functions. As to the components or the functions of parts with the same reference characters as those shown in Fig. 4 already explained, the explanation will be omitted.

The information processing system 100-1 shown in Fig. 1 differs from the conventional information processing system 100-3 shown in Fig. 4 in comprising a route switching unit 1018 in the information processing system 100-1. The route switching unit 1018 includes a route control section 1022, a transmitting/receiving section 0 (1019), a transmitting/receiving section 1 (1020) and a transmitting/receiving section 2 (1021).

In the route switching unit 1018, a southbridge I/F 1007 connected to the processor 0 (1000) is connected to the transmitting/receiving section 0 (1019), a southbridge I/F 1007 connected to the processor 1 (1001) is connected to the transmitting/receiving section 1 (1020), and a southbridge I/F 1007 connected to the southbridge 1008 is connected to the transmitting/receiving section 2 (1021).

The route control section 1022 is electrically connected to the respective transmitting/receiving sections 1019, ..., 1021 to transmit and receive respective internal signals 1023. The route switching unit 1018 changes the connection destination of the respective internal signals 1023 based on information of a route control signal 1024. Thereby, the route switching unit 1018 connects the southbridge 1008 connected to the transmitting/receiving section 2 (1021) to either one of the processor 0 (1000) connected to the transmitting/receiving section 0 (1019) and the processor 1 (1001) connected to the transmitting/receiving section 1 (1020).

Further, when an electrical characteristic of the southbridge I/Fs 1007 conforms to PCI-Express, an example of specific configuration of the route switching unit 1018 can be realized by the configuration using a signal conditioner element provided with a switch function in conformity with PCI-Express.

Alternatively, the route switching unit 1018 may be realized by selecting a switch device element that can switch among at least two inputs and at least one output and satisfy the electrical characteristic of the southbridge I/Fs 1007 and arranging the selected element in the respective transmitting/receiving sections 1019, ..., 1021.

The management unit 1013 includes the degradation control section 1016, the fault detection section 1014 and a route determination section 1025. The route determination section 1025 is electrically connected to the route switching unit 1018 to transmit the route control signal 1024. The fault detection section 1014 receives a system reset signal 1026 output from the southbridge 1008, and monitors a reset state of the information processing system 100-1. The "reset state" here defines a state that each device (that is, an object to be reset) of the information processing system 100-1 except for the management unit 1013 is reset.

Further, the fault detection section 1014, the route determination section 1025 and the degradation control section 1016 are electrically connected although not shown in the drawings. The route determination section 1025 controls an output of the route control signal 1024 based on information stored in the fault detection section 1014 to switch the connection destination of the southbridge 1008. Like the above, the degradation control section 1016 performs degradation control of an arbitrary processor 1000, 1001 based on the information stored in the fault detection section 1014. Further, means for performing degradation control of the processor is not limited to a specified one, and a conventional known means may be used.

Each of the route determination section 1025, the degradation control section 1016 and the fault detection section 1014 in the management unit 1013 is also provided with an internal register and a backup power supply such as a battery so as to make information stored in the internal register non-volatile even when the information processing system 100-1 is powered down.

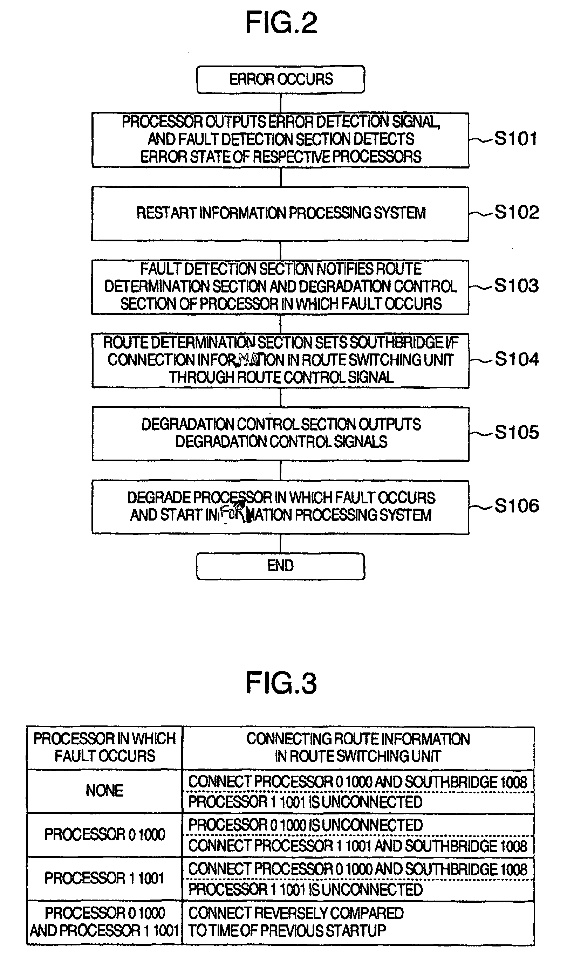

Next, the flow of degrading a processor will be explained below with reference to Figs. 1 and 2.

Now, it is assumed that the processor 0 (1000) of processors 0 (1000) and 1 (1001) causes an error.

At this time, the processor 0 (1000) notifies the fault detection section 1014 of the error detection signal 1015a. The fault detection section 1014 receives the error detection signal 1015a to detect that a fault occurs in the processor 0 (1000) (S101 in Fig. 2).

Here, after outputting the error detection signal, the processor 0 (1000) executes predetermined error processing or performs timeout processing started when such a critical fault occurs that a predetermined instruction cannot be executed, and thereby controls the system reset signal 1026 from the southbridge 1008 to restart the information processing system 100-1 (S102 in Fig. 2).

The fault detection section 1014 detects assert (i.e. the change in voltage level) of the system reset signal 1026 to notify the route determination section 1025 and the degradation control section 1016 of fault occurrence in the processor 0 (1000) (S103 in Fig. 2).

The route determination section 1025 outputs the route control signal 1024 to the route control section 1022, based on the notification of the fault occurrence in the processor 0 (1000) from the fault detection section 1014, and sets the southbridge I/F connection information in the route switching unit 1018 so that the southbridge 1008 and the processor 1 (1001) can be connected via the southbridge I/F1007 (S104 in Fig. 2). Meanwhile, the above setting is determined by the route determination section 1025 based on whether or not a fault occurs in the respective processors 1000 and 1001 and on an information table for setting a connecting route of the southbridge 1008, as shown in Fig. 3. When a fault occurs in both of the processors 1000 and 1001, the connecting route of the southbridge 1008 at the time of the next startup is reverse compared to that at the time of the previous startup. Namely, if the southbridge 1008 is connected to the processor 1000 but not to the processor 1001 at the time of the previous startup, the southbridge 1008 is connected to the processor 1001 1 but not to the processor 1000 at the time of the next startup.

On the other hand, the degradation control section 1016 outputs the degradation control signal 1017a to the processor 0 (1000) in which a fault occurs, based on the notification that a fault occurs in the processor 0 (1000) (S105 in Fig. 2).

By receiving the degradation control signal 1017a, the processor 0 (1000) is degraded. Then, the information processing system 100-1 becomes equivalent to the condition of not mounting the processor 0 (1000) logically or electrically and uses the processor 1 (1001) connected to the southbridge 1008 via the route switching unit 1018 to access the BIOS ROM 1010 and start the information processing system 100-1 (S106 in Fig. 2).

According to the above embodiment of the present invention, the route switching unit 1018 connects a processor having not caused an error and the southbridge 1008, and then the degradation control section 1016 degrades a processor having caused an error, and thus, even in a platform in which the BIOS ROM 1010 is accessed via a route including a specified processor due to connection restrictions between processors and chipsets, the information processing system 100-1 can be started by degrading an arbitrary processor which causes an error and it can resume to work as a computer.

### [EMBODIMENT 2]

Embodiment 2 will be explained below. In Embodiment 2, the present invention is applied to an information processing system 100-2 comprising a plurality of server modules configured so as to be mounted on a single chassis and to work as a server computer.

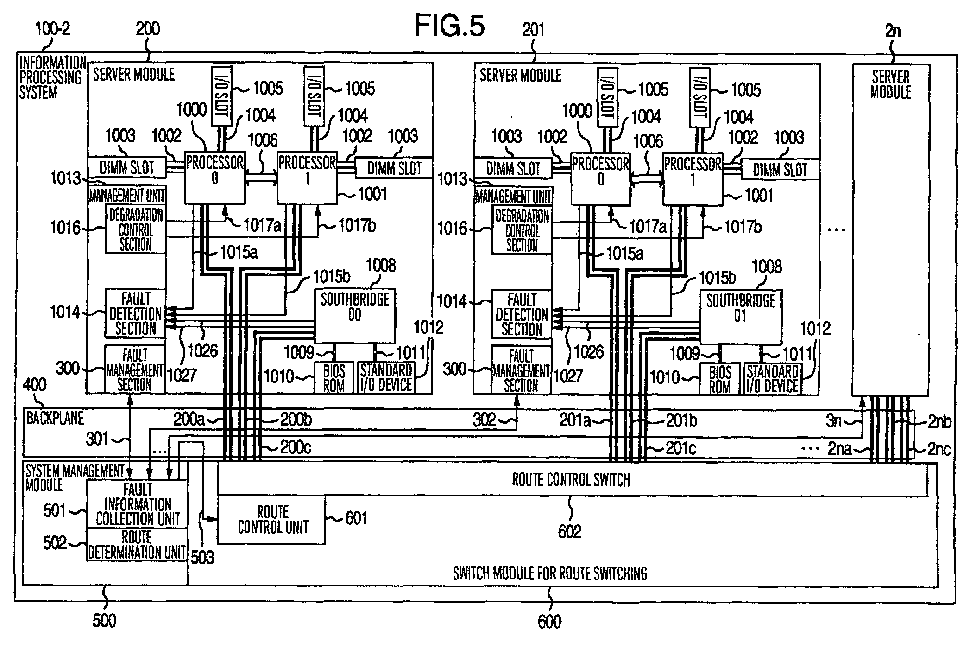

Fig. 5 is a block diagram of the information processing system 100-2 according to Embodiment 2. Parts with the same reference characters as those of Figs. 1 and 4 designate the same components or the same functions. As to the components or the functions of parts with the same reference characters as those in Figs. 1 and 4 already explained, the explanation will be omitted.

The information processing system 100-2 mounts server modules 200, ..., 2n (n=02, 03,...). The respective server modules 200, ..., 2n mounts processors (1000, 1001), DIMM slots (1003), I/O slots (1005), etc. and is configured to work as a server computer.

The server module 2n also has the same configuration as the server modules 200 and 201 although not shown in the drawings.

Further, the server modules 200, ..., 2n are connected to a system management module 500 and a switch module for route switching 600 via a backplane 400 supplying power and transmitting various kinds of signals. The system management module 500 functions to collect and manage information on the entire system. Further, the server modules 200, ..., 2n are connected to various types of modules required for the information processing system 100-2 to operate, such as a power unit, a LAN and a Fibre Channel as well although not shown in the drawings.

The information processing system 100-2 of Embodiment 2 shown in Fig. 5 differs from the information processing system 100-1 shown in Fig. 1 in connecting southbridge I/Fs (200a, ..., 2na) connected to processors 0 (1000), southbridge I/Fs (200b, ..., 2nb) connected to processors 1 (1001) and southbridge I/Fs (200c, ..., 2nc) connected to southbridges (1008), to the switch module for route switching 600 via the backplane 400.

Management units 1013 include a fault management section 300, a fault detection section 1014 and a degradation control section 1016.

The fault detection sections 1014 receive from the southbridges 1008 boot completion signals 1027 notifying that the predetermined initialization processing in the server modules 200, ..., 2n is completed and the system startup is completed. The fault detection sections 1014 monitor whether or not the server modules 200, ..., 2n are normally started as well as whether or not a fault occurs in the respective processors.

The fault management sections 300 output server module control signals 301, ..., 3n to a fault information collection unit 501 in a system management module 500, via the backplane 400. It is notified to the fault information collection unit 501 through server module control signals 301, ..., 3n whether or not a fault occurs in the respective processors on the server modules.

The system management module 500 includes a route determination unit 502 electrically connected to the fault information collection unit 501. The route determination unit 502 outputs via the backplane 400 to a route control unit 601 in the switch module for route switching 600, a route control signal 503 based on the information stored in the fault information collection unit 501.

The switch module for route switching 600 includes a route control switch 602 electrically connected to the route control unit 601. The switch module for route switching 600 further connects the southbridge I/Fs connected to the processors 0, 1 and the southbridge I/Fs connected to the southbridges 1008, on the basis of the southbridge I/F connection information set in the route control unit 601 by the route determination unit 502.

Here, in the route control switch 602, all ports (700a, ..., 7nc) can be connected in any combination. The southbridge I/Fs (200a, ..., 2na, 200b, ..., 2nb and 200c, ..., 2nc) can connect between any one processor included in an arbitrary server modules 200, ..., 2n and the southbridge 1008 included in an arbitrary server modules 200, ..., 2n. Further, in Embodiment 2, even-numbered server modules mounted on the information processing system 100-2 are paired with the next server module, and the latter server module is configured to operate as a standby module used when a fault occurs in the former server module.

In the information processing system 100-2 configured in this way, when a fault occurs in either one of the processors 0 (1000) and 1 (1001) included in an arbitrary server modules 200, ..., 2n and the other remains normal, a processor is degraded as shown in a flow chart according to Embodiment 1.

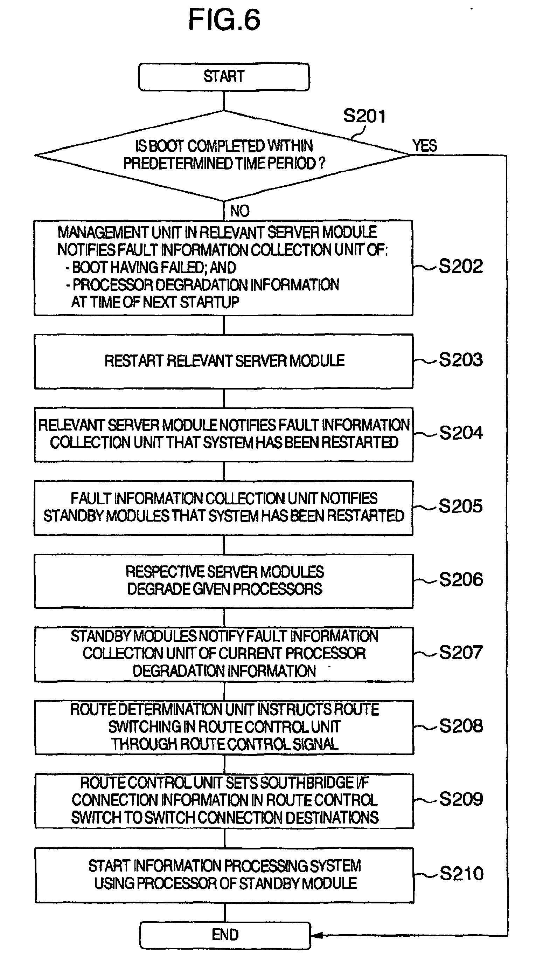

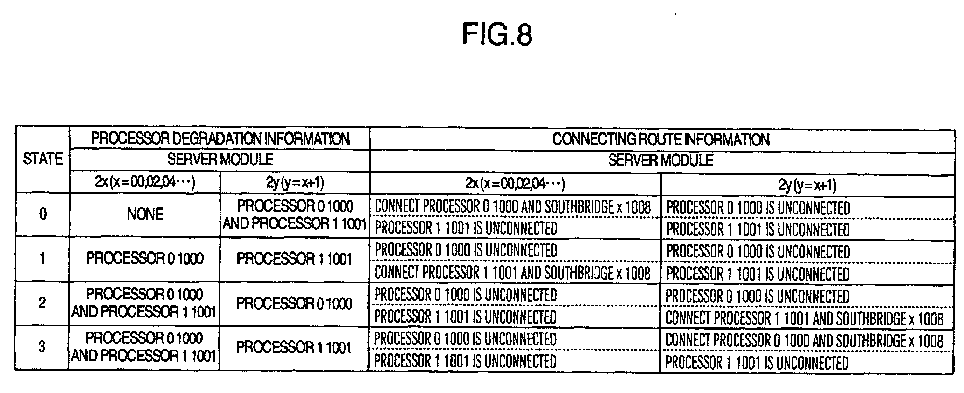

On the contrary, let us consider here a case where a fault occurs in either one or both of processor 0 (1000) and processor 1 (1001) in the server module 200 but normal starting of the server module 200 fails. An example of switching a connection destination processor of the southbridge 00 (1008) to a processor 0 (1000) in another server module 201 will be explained here with reference to Figs. 5 and 6. Now, the processors 0 and 1 in the server module 200 in its initial state work normally and are not degraded. And, the processors 0 and 1 in the server module 201 are degraded in a standby state. The southbridge 00 (1008) is connected to the processor 0 (1000) in the server module 200. Its initial state corresponds to State 0 in Fig. 8. There are States 1, 2, 3, etc. in Fig. 8 as other degradation states of the processors 0 and 1 in the server modules 200 and 201.

In the normal system starting processing of the server module 200 or the restarting processing by implementing degradation processing of a processor based on Embodiment 1, the fault detection section 1014, after detecting assert of the system reset signal 1026, monitors whether or not the boot completion signal 1027 is output within a predetermined time period (S201 in Fig. 6).

If the boot completion signal is output, boot of the server module 200 is completed normally and thus the processing ends.

On the other hand, when the boot completion signal 1027 is not output for any unknown fault, the fault management section 300 in the server module 200 notifies the fault information collection unit 501 in the system management module 500 that the server module 200 has failed in starting the system and notifies it of processor degradation information indicating the output state of processor degradation control signals at the time of the next starting, through the server module control signal 301. Further, the next processors to be degraded are determined based on information on the current degraded processors (S202 in Fig. 6).

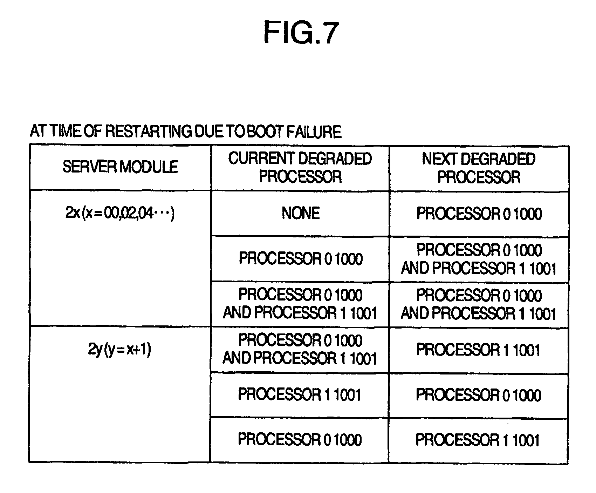

Fig. 7 shows a table prescribing a rule of degrading processors. As the processor degradation information, the table shown in Fig. 7 may be used. Alternatively, the next processors to be degraded may be determined on the basis of fault information on processors without using the table shown in Fig. 7. Further, the table of Fig. 7 is stored in the management unit 1013.

The server module 200 executes predetermined error processing or performs timeout processing started when such a critical fault occurs that a predetermined instruction cannot be executed, and thereby controls the system reset signal 1026 from the southbridge 00 (1008) to restart the server module 200 (S203 in Fig. 6).

The fault detection section 1014 detects assert of the system reset signal 1026, and notifies the fault information collection unit 501 that the system has been restarted, through the sever module control signal 301 (S204 in Fig. 6).

The system management module 500 notified that the system has been restarted notifies to the fault management section 300 in the server module 201 that the system has been restarted, through the server module control signal 302 (S205 in Fig. 6).

Upon restarting the system, the degradation control section 1016 in the server module 200 outputs degradation control signals 1017a and 1017b to perform degradation control of predetermined processors according to Fig. 7. Like the above, the degradation control section 1016 in the server module 201 outputs degradation control signals 1017a and 1017b to perform degradation control of predetermined processors according to Fig. 7 (S206 in Fig. 6).

The server module 201 also notifies the fault information collection unit 501 of the processor degradation information indicating the current output state of degradation control signals, through the server module control signal 302 (S207 in Fig. 6).

Next, the route determination unit 502, based on the degradation information on the processors of the respective server modules stored in the fault information collection unit 501, outputs to the route control unit 601 a route control signal 503 including connecting route information and route switching instruction to instruct route switching, for example, so as to connect as described in the connecting route information defining the connection destination processors of the southbridges in the table shown in Fig. 8 (S208 in Fig. 6).

Meanwhile, the connection destination processors of the southbridges may be determined using the table shown in Fig. 8 or using the fault information on processors without using the table shown in Fig. 8. Further, the table shown in Fig. 8 is stored in the route determination unit 502.

An example will be explained below. In the example, the processor 0 (1000) of the server module 200 which is the connection destination of the southbridge 00 (1008) is switched into the processor 0 (1000) of the server module 201.

Further, the state after switching as explained below is a state in which both processors (1000, 1001) of the server module 200 and the processor 1 (1001) of the server module 201 are degraded, and it corresponds to State 3 in Fig. 8.

Here, the route control unit 601 sets the southbridge I/F connection information in the route control switch 602, and switches the connection destinations of the southbridge I/Fs (S209 in Fig. 6).

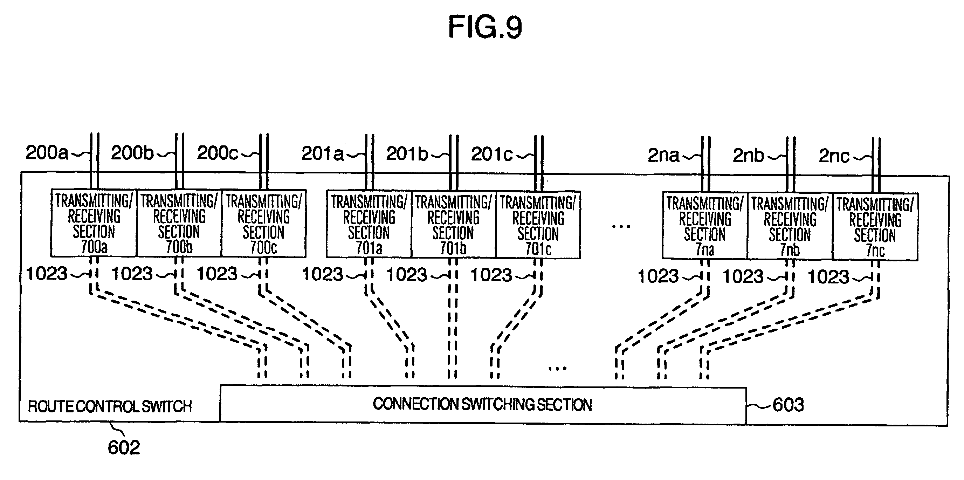

Specific route switching will be explained with reference to the detailed block diagram of the route control switch 602 shown in Fig. 9.

The route control switch 602 includes transmitting/receiving sections 700a, 700b, 700c, ..., 7na, 7nb, 7nc and a connection switching section 603. The respective transmitting/receiving sections 700a, 700b, 700c, ..., 7na, 7nb, 7nc are connected to the respective southbridge I/Fs 200a, 200b, 200c, ..., 2na, 2nb, 2nc from the respective server modules 200, ..., 2n, respectively. The transmitting/receiving sections 700a, 700b, 700c, ..., 7na, 7nb, 7nc are electrically connected to the connection switching section 603 to transmit/receive internal signals 1023. The connection switching section 603 connects the transmitting/receiving sections 700c connected to the southbridge 00 (1008) via the southbridge I/F 200c and the transmitting/receiving sections 701a connected to the processor 00 (1000) of the server module 201 via the southbridge I/F 201a. Further, the transmitting/receiving sections 700a, 700b, 701 b and 701c are unconnected.

When the electrical characteristic of southbridge I/Fs 200a, 200b, 200c, ..., 2na, 2nb, 2nc conforms to PCI-Express, the route control switch 602 can also be realized by means of the configuration using a switch in conformity with PCI-Express.

Then, the switch module for route switching 600 connects the BIOS ROM 1010 to a predetermined processor of the server module 201 via the southbridge 00 (1008) so that the BIOS ROM 1010 is accessed and the server module 200 is started.

In this way, the respective processors in the server module 200 are degraded, and the system can be started by using the processor in the standby server module 201 (S210 in Fig. 6).

Meanwhile, this embodiment is explained using the combination of the server modules 200 and 201. However, in another combination, the connection destination processor of the southbridge can be similarly changed.

As seen from the above, in the information processing system 100-2 of this embodiment including a plurality of server modules which can be mounted in one chassis, the switch module for route switching 600 can connect any one processor on an arbitrary server module connected via the backplane 400 to the switch module for route switching and the southbridge on an arbitrary server module. When a fault occurs in a processor or a southbridge of a particular server module, the connection destinations of southbridge I/Fs 200a, 200b, 200c, ..., 2na, 2nb, 2nc are changed into devices of another server module, so that the system can be restarted and it can resume to work as a computer.

In the information processing system according to Embodiment 2, a processor which accesses to the BIOS ROM 1010 may be any one processor in an arbitrary server module. However, embodiments of the present invention are not limited to this. For example, a faulty part may be isolated by switching the southbridge 1008 between server modules 200 and 201. Further, in the information processing system according to Embodiment 2, although a plurality of server modules operate as standby modules, embodiments of the present invention are not limited to this. For example, in an environment which a plurality of server modules operate by means of a SMP configuration, the present invention may be carried out when performing degradation processing of a processor connected to a southbridge.

Further, embodiments of the present invention are not limited to the above ones but encompass various modifications. For example, the above embodiments are described in detail in order to comprehensively explain the present invention. Therefore, the present invention is not necessarily limited to the system including all explained elements. Further, the above respective constituent elements and means for realizing the above functions may be realized in hardware, for example, by designing some or all of them using integrated circuits. Alternatively, they may be realized in software by a processor interpreting and executing programs which make the processor realize the respective functions.

It should be further understood by those skilled in the art that although the foregoing description has been made on embodiments of the invention, the invention is not limited thereto and various changes and modifications may be made without departing from the scope of the appended claims.

## Claims

1. An information processing system (100-1) comprising:
a plurality of processor units (1000, 1001);
a first memory unit (1010) having a basic input/output system (BIOS) and being accessed by only any one of the plurality of processor units;
a route switching unit (1018) which connects via a southbridge (1008) the any one processor unit and the first memory unit among the plurality of processor units and the first memory unit;
a management unit (1013) comprising a fault detection section (1014) which detects a fault occurring in the processor units, a degradation control section (1016) which performs degradation control of a processor unit (1000) in which a fault has occurred, based on information stored in the fault detection section (1014), and a route determination section (1025) which controls routes in the route switching unit (1018); and
I/O devices (1012) connected to the southbridge (1008),
wherein
the management unit (1013), when a fault occurs in the processor unit (1000),
determines a route connecting any one processor unit (1001) in which a fault does not occur and the first memory unit (1010), and
transmits the determined route information (1024) to the route switching unit (1018);
the route switching unit (1018)
comprises a plurality of first transmitting/receiving sections (1019, 1020) connecting via interfaces (1007) to the plurality of processor units (1000, 1001), a second transmitting/receiving section (1021) connecting via an interface (1007) to the southbridge (1008), and a route control section (1022); and
the route control section (1022)
receives the route information (1024) transmitted from the management unit (1013), and
connects, based on the received route information (1024), the first transmitting/receiving section (1020) connecting via the interface (1007) to any one processor unit (1001) in which a fault does not occur, and the second transmitting/receiving section (1021).

2. The information processing system according to claim 1, wherein
the information processing system comprises a link (1006) via which the plurality of processor units (1000, 1001) are connected to each other; and
the any one processor unit (1001) access the first memory unit (1010) via a route connected through the any one processor unit (1001).

3. The information processing system according to claim 2, wherein
the first memory unit (1010) is a BIOS ROM.

4. The information processing system according to claim 3, wherein any one of the processor units (1001) in which a fault does not occur accesses the BIOS ROM via the southbridge (1008),
reads out the BIOS from the first memory unit, and
executes the read BIOS and starts the information processing system.

## Patentansprüche

1. Informationsverarbeitungssystem (100-1), umfassend:
mehrere Prozessoreinheiten (1000, 1001);
eine erste Speichereinheit (1010), die ein Basisdatenaustauschsystem (BIOS) aufweist und auf die nur durch eine der mehreren Prozessoreinheiten zugegreift;
eine Routenumschalteinheit (1018), die über eine Southbridge (1008) die eine Prozessoreinheit und die erste Speichereinheit unter den mehreren Prozessoreinheiten und der ersten Speichereinheit verbindet;
eine Verwaltungseinheit (1013), die einen Fehlererkennungsabschnitt (1014), der einen in den Prozessoreinheiten auftretende Fehler erkennt, einen Herabstufungssteuerabschnitt (1016), der eine Herabstufungssteuerung einer Prozessoreinheit (1000), in der ein Fehler aufgetreten ist, anhand von in dem Fehlererkennungsabschnitt (1014) gespeicherten Informationen durchführt, und einen Routenfestlegungsabschnitt (1025) umfasst, der Routen in der Routenumschalteinheit (1018) steuert; und
Eingabe-/Ausgabevorrichtungen (1012), die mit der Southbridge (1008) verbunden sind,
wobei
die Verwaltungseinheit (1013) beim Auftreten eines Fehlers in der Prozessoreinheit (1000)
eine Route festlegt, die eine Prozessoreinheit (1001), in der ein Fehler nicht auftritt, und die erste Speichereinheit (1010) verbindet, und
die festgelegten Routeninformationen (1024) an die Routenumschalteinheit (1018) überträgt;
die Routenumschalteinheit (1018)
mehrere erste Übertragungs-/Empfangsabschnitte (1019, 1020), die über Schnittstellen (1007) mit den mehreren Prozessoreinheiten (1000, 1001) verbunden sind, einen zweiten Übertragungs-/Empfangsabschnitt (1021), der über eine Schnittstelle (1007) mit der Southbridge (1008) verbunden ist, und einen Routensteuerabschnitt (1022) umfasst; und
der Routensteuerabschnitt (1022)
die von der Verwaltungseinheit (1013) übertragenen Routeninformationen (1024) empfängt und
anhand der empfangenen Routeninformationen (1024) den ersten Übertragungs-/Empfangsabschnitt (1020), der über die Schnittstelle (1007) mit einer Prozessoreinheit (1001) verbunden ist, in der ein Fehler nicht auftritt, und den zweiten Übertragungs-/Empfangsabschnitt (1021) verbindet.

2. Informationsverarbeitungssystem nach Anspruch 1, wobei
das Informationsverarbeitungssystem einen Link (1006) umfasst, über den die mehreren Prozessoreinheiten (1000, 1001) miteinander verbunden sind; und
die eine Prozessoreinheit (1001) über eine durch die eine Prozessoreinheit (1001) verbundene Route auf die erste Speichereinheit (1010) zugreift.

3. Informationsverarbeitungssystem nach Anspruch 2, wobei
die erste Speichereinheit (1010) ein BIOS ROM ist.

4. Informationsverarbeitungssystem nach Anspruch 3, wobei
eine der Prozessoreinheiten (1001), in der ein Fehler nicht auftritt,
über die Southbridge (1008) auf das BIOS ROM zugreift,
das BIOS aus der ersten Speichereinheit ausliest, und
das gelesene BIOS ausführt und das Informationsverarbeitungssystem startet.

## Revendications

1. Système de traitement d'informations (100-1) comportant :
une pluralité d'unités de processeur (1000, 1001),
une première unité de mémoire (1010) ayant un système d'entrée/sortie de base (BIOS) et faisant l'objet d'un accès uniquement par une unité quelconque parmi la pluralité d'unités de processeur,
une unité de commutation de trajet (1008) laquelle relie par l'intermédiaire d'un contrôleur d'entrée-sortie (1008) l'unité de processeur quelconque et la première unité de mémoire parmi la pluralité d'unités de processeur et la première unité de mémoire,
une unité de gestion (1013) comportant une section de détection de défaillance (1014) laquelle détecte une défaillance survenant dans les unités de processeur, une section de commande de dégradation (1016) laquelle exécute une commande de dégradation d'une unité de processeur (1000) dans laquelle une défaillance est survenue, sur la base d'informations mémorisées dans la section de détection de défaillance (1014), et une section de détermination de trajet (1025) laquelle commande des trajets dans l'unité de commutation de trajet (1018), et
des dispositifs E/S (1012) reliés au contrôleur d'entrée-sortie (1008),
dans lequel
l'unité de gestion (1013), lorsqu'une défaillance survient dans l'unité de processeur (1000),
détermine un trajet reliant une unité de processeur quelconque (1001) dans laquelle une défaillance n'est pas survenue et la première unité de mémoire (1010), et
transmet les informations de trajet déterminées (1024) à l'unité de commutation de trajet (1018),
dans lequel
l'unité de commutation de trajet (1018)
comporte une pluralité de premières sections de transmission/réception (1019, 1020) reliées via des interfaces (1007) à la pluralité d'unités de processeur (1000, 1001), une seconde section de transmission/réception (1021) reliée via une interface (1007) au contrôleur d'entrée-sortie (1008), et une section de commande de trajet (1022), et
dans lequel
la section de commande de trajet (1022)
reçoit les informations de trajet (1024) transmises par l'unité de gestion (1013), et
relie, sur la base des informations de trajet reçues (1024), la première section de transmission/réception (1020) reliée via l'interface (1007) à une unité de processeur quelconque (1001) dans laquelle une défaillance n'est pas survenue, et la seconde section de transmission/réception (1021).

2. Système de traitement d'informations selon la revendication 1, dans lequel
le système de traitement d'informations comporte une liaison (1006) par l'intermédiaire de laquelle la pluralité d'unités de processeur (1000, 1001)sont reliées les uns aux autres, et
l'unité de processeur quelconque (1001) accède à la première unité de mémoire (1010) par l'intermédiaire d'un trajet relié à travers l'unité de processeur quelconque (1001).

3. Système de traitement d'informations selon la revendication 2, dans lequel la première unité de mémoire (1010) est une mémoire ROM du BIOS.

4. Système de traitement d'informations selon la revendication 3, dans lequel
n'importe laquelle des unités de processeur (1001) dans laquelle une défaillance n'est pas survenue
accède à la mémoire ROM du BIOS via le contrôleur d'entrée-sortie (1008),
extrait le BIOS de la première unité de mémoire, et
exécute le BIOS extrait et lance le système de traitement d'informations.
